# FASCICULE DE BREVET EUROPEEN

(11) **EP 0 848 017 B1**
(45) Date de publication et mention de la délivrance du brevet: **14.08.2002**
(21) Numéro de dépôt: 97402943.1
(22) Date de dépôt: 05.12.1997
(51) Int. Cl.: C08F 8/30

(54) **Polyoléfines greffées comportant un cycle succinimide substitué sur l'azote par un groupement réactif**
Gepfropfte Polyolefine mit an Stickstoff reaktiven Gruppen substituierten Bernsteinsäureimide-Ringen
Grafted polyolefins containing reactif group substituted succinimide rings onto nitrogen

(30) Priorité: 12.12.1996 FR 9615473
(43) Date de publication de la demande: 17.06.1998
(73) Titulaire: INSTITUT FRANCAIS DU PETROLE, 92502 Rueil-Malmaison (FR)
(72) Inventeur: Camberlin, Yves, 69300 Caluire (FR); Hauviller, Frédérique, 69230 Saint Genis Laval (FR); Gonzalez, Serge, 69150 Decines (FR)

(56) Documents cités:
- DE-A- 3 713 120
- DE-A- 4 333 670
- FR-A- 2 690 266
- GB-A- 1 160 031
- US-A- 5 075 386

## Description

La présente invention concerne des polymères contenant au moins un cycle succinimide substitué sur l'azote par un groupement réactif, ledit cycle étant supporté soit par la chaîne principale, soit par une chaîne latérale. Dans le cadre de la présente invention on désigne par groupement réactif tout groupement pouvant provoquer l'ouverture d'un cycle oxiranne et former une liaison entre ce groupement et le composé comportant un cycle oxiranne.

Les polymères de la présente invention ont des propriétés améliorées par rapport aux polymères ne comportant pas de cycle succinimide substitué sur l'azote par un groupement réactif. Ils ont en particulier de meilleures propriétés adhésives et peuvent ainsi être employés comme revêtements de surface. Ils ont également une meilleure tenue thermique que les polymères dont ils dérivent.

Les polymères de la présente invention possèdent des groupes réactifs qui permettent leur utilisation pour la fabrication d'alliages de polymères.

Les polymères de la présente invention peuvent être définis comme étant des polyoléfines contenant au moins un cycle succinimide substitué sur l'azote par un groupement réactif, ledit cycle étant supporté soit par la chaîne principale, soit par une chaîne latérale, résultant de la réaction d'au moins une polyoléfine, d'au moins un composé comportant un cycle maléimide substitué sur l'azote par un groupement réactif de formule -R-(X)ₙ dans laquelle X représente un groupement réactif, n un nombre entier positif égal ou supérieur à 1 et R est un reste comportant au moins un atome de carbone et d'au moins un polyépoxyde contenant dans sa molécule au moins deux groupes époxydes. Le plus souvent n est égal à 1 et dans ce cas le composé comportant un cycle maléimide utilisé dans le cadre de la présente invention est représenté par la formule I ci-après :

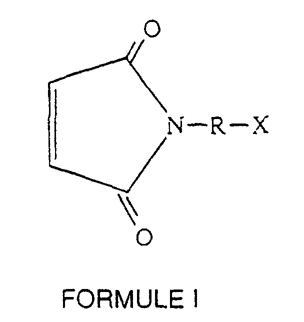

Le groupe réactif -X est habituellement choisi parmi un groupe hydroxyle, un groupe carboxylique, un groupe carboxamide, un groupe halogénure d'acide carboxylique, un groupe thiol, un groupe thio-carboxylique, un groupe amino, un halogène, un groupe époxy, un groupe carboxylique estérifié dont la partie ester comporte un groupe réactif. Dans le cas où plusieurs groupes -X sont présents ils peuvent être identiques entre eux ou différents.

On utilise très souvent des composés comportant un groupe réactif choisi parmi le groupe carboxylique, le groupe carboxamide, un groupe halogénure d'acide et par exemple un groupe chlorure d'acide carboxylique. Le groupe préféré est le groupe carboxylique.

Le groupe -R- est habituellement choisi parmi les groupes hydrocarbonés aliphatiques, saturés ou insaturés, substitués ou non, les groupes aromatiques substitués ou non substitués. On préfère généralement des groupes non substitués et le plus souvent des groupes comportant au moins un noyau aromatique. A titre d'exemples de groupes que l'on trouve très fréquemment, on peut citer les groupes benzéniques reliés en ortho, méta ou para d'une part à l'atome d'azote et d'autre par au groupe réactif -X. On utilise le plus souvent la forme liée en para ou celle liée en méta.

Les polyoléfines employées pour fabriquer les polymères de la présente invention peuvent être n'importe quelles polyoléfines bien connues des hommes du métier. On utilisera de préférence des polyoléfines obtenues à partir d'au moins un monomère insaturé comportant une ou plusieurs insaturations, le plus souvent choisi dans le groupe formé par l'éthylène, le propène, les butènes et les norbornènes. Ainsi ces polyoléfines peuvent-elles être formées par homopolymérisation ou copolymérisation d'au moins deux monomères.

Dans une forme particulièrement préférée, la polyoléfine sera choisie dans le groupe formé par les polyéthylènes haute densité et les copolymères d'éthylène constitués de préférence de 90 %, au moins, de motifs éthylène et de 10 %, au plus, d'une oléfine en C3 à C8. On utilisera plus particulièrement les polyéthylènes haute densité ayant de préférence une densité d'environ 0,9 à environ 0,97 et un indice de fusion mesuré selon la norme ASTM D-1238 d'environ 0,2 à environ 100 (mesure effectuée sous 19,6 kg à 190 °C).

Le polyépoxyde contenant dans sa molécule au moins deux groupes époxydes est le plus souvent choisi dans le groupe formé par les polyépoxydes aliphatiques, les polyépoxydes cycloaliphatiques et les polyépoxydes aromatiques. A titre d'exemples de composés très souvent employés, on peut citer le diglycidyléther du bis-phénol-A ou celui du bis-phénol-F, le triglycidyléther-isocyanurate et/ou le triglycidyléther-cyanurate et/ou le triglycidyl-cyanurate et/ou le triglycidyl-isocyanurate ou les mélanges d'au moins deux de ces composés. Les composés époxydés comprenant au moins deux groupes époxydes cités dans le brevet US-A-4 921 047 sont également utilisables dans le cadre de la présente invention.

Les polymères de la présente invention sont habituellement préparés par deux méthodes distinctes. La première méthode consiste en la mise en contact de la polyoléfine à l'état fondu avec au moins un composé comportant un cycle maléimide substitué sur l'azote par un groupement réactif et au moins un composé contenant dans sa molécule au moins deux groupes époxydes au sein d'un mélangeur ou dans une extrudeuse. Cette préparation peut être effectuée avec ou sans amorceur radicalaire. A titre d'exemples d'amorceurs radicalaires, on peut citer les peroxydes. Dans le cadre de la présente invention, on préfère habituellement travailler sans amorceur radicalaire. Cette possibilité de formation sans amorceur radicalaire de polymères contenant un cycle succinimide substitué sur l'azote par un groupement réactif, ledit cycle étant supporté soit par la chaîne principale, soit par une chaîne latérale, est un avantage certain de la présente invention, qui permet d'éviter les risques de coupures et les risques de réticulation du polymère. La température de la réaction est habituellement comprise entre environ la température de fusion de la polyoléfine et environ 300 °C. Le plus souvent cette température est d'environ 200 °C à environ 260 °C. La durée de la réaction est relativement faible et ne dépasse pas habituellement 10 minutes. On préfère habituellement utiliser le système par extrusion-réaction qui donne de très bons résultats.

La deuxième méthode de préparation des polymères de la présente invention consiste dans une étape a) en la mise en contact de la polyoléfine à l'état fondu avec au moins un composé comportant un cycle maléimide substitué sur l'azote par un groupement réactif au sein d'un mélangeur ou dans une extrudeuse, puis dans une étape b) on introduit au sein du mélangeur ou dans l'extrudeuse au moins un composé contenant dans sa molécule au moins deux groupes époxydes. Cette préparation peut être effectuée avec ou sans amorceur radicalaire. A titre d'exemples d'amorceurs radicalaires, on peut citer les peroxydes. Dans le cadre de la présente invention, on préfère habituellement travailler sans amorceur radicalaire. Cette possibilité de formation sans amorceur radicalaire de polymères contenant un cycle succinimide substitué sur l'azote par un groupement réactif, ledit cycle étant supporté soit par la chaîne principale, soit par une chaîne latérale, est un avantage certain de la présente invention, qui permet d'éviter les risques de coupures et les risques de réticulation du polymère. La température de la réaction dans l'étape a) comme dans l'étape b) est habituellement comprise entre environ la température de fusion de la polyoléfine et environ 300 °C. Le plus souvent cette température est d'environ 200 °C à environ 260 °C. La durée de la réaction est relativement faible et ne dépasse pas habituellement 10 minutes pour chacune des étapes. On préfère habituellement utiliser le système par extrusion-réaction qui donne de très bons résultats. La température est le plus souvent identique dans les deux étapes.

La présente invention concerne aussi l'utilisation des polymères décrits ci-devant pour la fabrication de revêtement de surface. Ces polymères ayant de bonnes propriétés d'adhésion conviennent mieux que les polyoléfines de départ à cette utilisation. Ces polymères peuvent aussi être employés pour la fabrication d'alliages de polymères, dans lesquels la fonction réactive améliore la formation desdits alliages. ils peuvent également servir à la fabrication de produits par co-extrusion. Ils peuvent aussi être employés pour la fabrication de matériaux multicouches.

Les exemples suivants illustrent l'invention sans en limiter la portée.

### Exemple 1

Dans cet exemple, on décrit la préparation d'un polymère greffé dans un mélangeur.

On introduit 40 g de polyéthylène de moyenne densité (d = 0,954) commercialisé par la société FINA sous la référence Finathène 3802® et 0,4 g d'acide 4-maléimidobenzoïque (AMB) et 1,84 g d'Araldite GT 7071® commercialisé par la société CIBA-GEIGY (dont l'indice d'époxyde est de 2 et l'équivalent époxyde de 500) dans un mélangeur interne de marque Haake Rhéocord®. La température de travail est de 240 °C, la vitesse de rotation des pales est de 64tours/minutes (tr/min). Après 5 minutes de mélange à 240 °C, le produit de la réaction est refroidi dans l'eau, séché à 60 °C sous 1 millimètre (mm) de mercure pendant 8 heures. Le produit obtenu est utilisé pour des tests d'adhésion dont les résultats figurent dans le tableau 1 ci-après.

### Exemple 2

Dans cet exemple, on décrit la préparation d'un polymère greffé en utilisant une extrudeuse corotative bi-vis CLEXTRAL vendue sous la référence BC21 et dont le rapport longueur/diamètre est de 28, dont les vis ont un diamètre de 25 mm et qui est équipée d'une filière de 4 mm de diamètre.

On introduit simultanément dans la trémie d'alimentation de l'extrudeuse les granulés de polyéthylène Finathène 3802®, une quantité correspondant à 1% en poids d'AMB par rapport au polyéthylène et la quantité équimolaire correspondante d'Araldite GT 7071®.

Le débit total de produits introduits dans l'extrudeuse est de 5 kilogrammes par heure et la température de réaction au sein de l'extrudeuse est maintenue à 240 °C. La vitesse de rotation des vis est de 100 tr/min, le temps de séjour est de 1 minute. Le jonc qui sort de la filière est refroidi dans de l'eau à 25 °C, granulé et séché pour les tests d'adhésion.

### Exemple 3

Dans cet exemple, on décrit la préparation d'un polymère greffé dans un mélangeur en deux étapes successives.

On introduit 40 g de Finathène 3802® et 0,4 g d'AMB dans un mélangeur interne de marque Haake Rhéocord®. La température de travail est de 240 °C, la vitesse de rotation des pales est de 64 tours/minutes (tr/min). Après 2 minutes de mélange à 240 °C, on additionne 1,84 g d'Araldite GT 7071® et on maintient la température à 240 °C pendant encore 5 min après cette addition. Le produit obtenu à la fin de la deuxième étape est refroidi dans l'eau, séché à 60 °C sous 1 millimètre (mm) de mercure pendant 8 heures. Le produit obtenu est utilisé pour des tests d'adhésion dont les résultats figurent dans le tableau 1 ci-après.

### Exemple 4

On effectue avec divers produits des tests d'adhésion sur éprouvettes métalliques en aluminium.

Les propriétés d'adhésion des compositions sont déterminées selon la méthode ASTM D1002.

La procédure de test suivie comprend la préparation des éprouvettes métalliques. On prépare 600 cm³ de mélange sulfochromique, on place une série d'éprouvettes sur un support et on les immerge dans un récipient contenant le mélange sulfochromique maintenu à une température de 60 °C. Après 15 min, on retire les éprouvettes. Elles sont rincées abondamment à l'eau et séchées en étuve 2 heures à 80 °C.

On délimite sur une éprouvette une surface de collage de 25,4 mm x 12,7 mm et, à l'aide de cales, une épaisseur maximum du joint de colle de 125·10⁻⁶ m. Le collage des deux éprouvettes est effectué à l'aide d'une presse à plateaux DARRAGON préchauffée à 200 °C, avec application d'une pression de 0,5 MPa pendant 5 min.

On réalise ensuite un test de traction sur une machine de type INSTRON, équipée d'une tête de mesure de 10⁵ Newton. La vitesse de déplacement de la traverse est de 1 mm/min.

Les résultats des essais des tests de collage sont mentionnés dans le tableau 1 ci-après. Les valeurs données correspondent à la valeur moyenne obtenue sur 10 essais successifs. A titre de comparaison, des tests ont été effectués sur le polyéthylène de moyenne densité PEHD Finathène 3802® et avec un terpolymère vendu par la société ORKEM sous la référence 3210®, de masse moléculaire moyenne en nombre de 15 050 et d'indice de polydispersité de 5,3.

**TABLEAU 1**

| Nature du polymère testé | Charge à la rupture en kiloNewton(kN) | Nature de la rupture |
|---|---|---|
| PEHD | 2,1 | adhésive |
| Lotader 3210® | 2,7 | adhésive |
| Produit exemple 1 | 3,9 | cohésive |
| Produit exemple 2 | 4,2 | cohésive |
| Produit exemple 3 | 4,0 | cohésive |

On constate l'augmentation importante de la charge maximale nécessaire pour provoquer la rupture par emploi des produits de la présente invention, ainsi que la différence de nature de la rupture qui se fait dans la masse ce qui démontre l'amélioration importante de l'adhésion obtenue avec les produits de l'invention.

## Revendications

1. Polymère contenant au moins un cycle succinimide substitué sur l'azote par un groupement réactif, ledit cycle étant supporté soit par la chaîne principale, soit par une chaîne latérale **caractérisé en ce qu'**il est le produit résultant de la réaction d'au moins une polyoléfine, d'au moins un composé comportant un cycle maléimide substitué sur l'azote par un groupement réactif de formule -R-(X)ₙ dans laquelle X représente un groupement réactif, n un nombre entier positif égal ou supérieur à 1 et R est un reste comportant au moins un atome de carbone et d'au moins un polyépoxyde contenant dans sa molécule au moins deux groupes époxydes.

2. Polymère selon la revendication 1 dans lequel le groupe réactif X est choisi parmi un groupe hydroxyle, un groupe carboxylique, un groupe carboxamide, un groupe halogénure d'acide carboxylique, un groupe thiol, un groupe thio-carboxylique, un groupe amino, un halogène, un groupe époxy, un groupe carboxylique estérifié dont la partie ester comporte un groupe réactif.

3. Polymère selon la revendication 1 ou 2 dans lequel le groupe -R- est choisi parmi les groupes hydrocarbonés aliphatiques, saturés ou insaturés, substitués ou non, les groupes aromatiques substitués ou non substitués.

4. Polymère selon l'une des revendications 1 à 3 dans lequel la polyoléfine est choisie dans le groupe formé par les polyoléfines obtenues à partir d'au moins un monomère insaturé choisi dans le groupe formé par les composés comportant une ou plusieurs insaturations et de préférence choisi dans le groupe formé par l'éthylène, le propène, les butènes et les norbomènes.

5. Polymère selon la revendication 4 dans lequel la polyoléfine est un polyéthylène haute densité.

6. Polymère selon l'une des revendications 1 à 5 dans lequel le groupe -R- est un reste benzénique et le groupe -X est en position para par rapport à l'atome d'azote.

7. Polymère selon l'une des revendications 1 à 6 dans lequel le groupe -X est un groupe carboxylique.

8. Polymère selon l'une des revendications 1 à 6 dans lequel le poly-époxyde contenant dans sa molécule au moins deux groupes époxydes est choisi dans le groupe formé par les polyépoxydes aliphatiques, les polyépoxydes cycloaliphatiques et les polyépoxydes aromatiques. et de préférence parmi les composés du groupe formé par le diglycidyléther du bis-phénol-A ou celui du bis-phénol-F, le triglycidyléther-isocyanurate, le triglycidyléther-cyanurate, le triglycidyl-cyanurate, le triglycidyl-isocyanurate ou les mélanges d'au moins deux de ces composés.

9. Procédé de préparation d'un polymère selon l'une des revendications 1 à 8 **caractérisé en ce qu'**il est obtenu par mise en contact de la polyoléfine à l'état fondu avec au moins un composé comportant un cycle maléimide substitué sur l'azote par un groupement réactif et avec au moins un polyépoxyde contenant dans sa molécule au moins deux groupes époxydes au sein d'un mélangeur ou dans une extrudeuse.

10. Procédé de préparation d'un polymère selon l'une des revendications 1 à 8 **caractérisé en ce que** dans une étape a) on met en contact au moins une polyoléfine à l'état fondu avec au moins un composé comportant un cycle maléimide substitué sur l'azote par un groupement réactif au sein d'un mélangeur ou dans une extrudeuse, puis dans une étape b) on introduit au sein du mélangeur ou dans l'extrudeuse au moins un composé contenant dans sa molécule au moins deux groupes époxydes.

11. Utilisation des polymères selon l'une des revendications 1 à 8 ou préparés selon la revendication 9 ou 10 pour la fabrication de revêtements de surface.

12. Utilisation des polymères selon l'une des revendications 1 à 8 ou préparés selon la revendication 9 ou 10 pour la fabrication d'alliages de polymères.

13. Utilisation des polymères selon l'une des revendications 1 à 8 ou préparés selon revendication 9 ou 10 pour la fabrication de produits par coextrusion.

14. Utilisation des polymères selon l'une des revendications 1 à 8 ou préparés selon revendication 9 ou 10 pour la fabrication de matériaux multicouches.

## Claims

1. A polymer containing at least one succinimide ring substituted on the nitrogen atom by a reactive group, the ring being supported either by the main chain or by a side chain, **characterized in that** it is the product resulting from reacting at least one polyolefin with at least one compound containing a maleimide ring substituted on the nitrogen atom by a reactive group with formula -R-(X)ₙ where X is a reactive group, n is a whole positive number equal to 1 or more and R is a residue containing at least one carbon atom, and with at least one polyepoxide containing at least two epoxy groups in its molecule.

2. A polymer according to claim 1, in which the reactive group X is selected from a hydroxyl group, a carboxylic group, a carboxamide group, a carboxylic acid halide group, a thiol group, a thiocarboxylic group, an amino group, a halogen, an epoxy group, and an esterified carboxylic group in which the ester portion contains a reactive group.

3. A polymer according to claim I or claim 2, in which group -R- is selected from saturated or unsaturated, substituted or unsubstituted aliphatic hydrocarbons, and substituted or unsubstituted aromatic groups.

4. A polymer according to any one of claims 1 to 3, in which the polyolefin is selected from the group formed by polyolefins obtained from at least one unsaturated monomer selected from the group formed by compounds containing one or more unsaturated bonds, preferably selected from the group formed by ethylene, propene, butenes and norbomenes.

5. A polymer according to claim 4, in which the polyolefin is a high density polyethylene.

6. A polymer according to any one of claims 1 to 5, in which the group -R- is a benzene residue and the group -X is in the position para to the nitrogen atom.

7. A polymer according to any one of claims 1 to 6, in which the group -X is a carboxylic group.

8. A polymer according to any one of claims 1 to 6, in which the polyepoxide containing at least two epoxy groups in its molecule is selected from the group formed by aliphatic polyepoxides, cycloaliphatic polyepoxides and aromatic polyepoxides, preferably from compounds in the group formed by the diglycidylether of bis-phenol-A or that of bis-phenol-F, triglycidylether-isocyanurate, triglycidylether-cyanurate, triglycidyl-cyanurate, triglycidyl-isocyanurate or mixtures of at least two of these compounds.

9. A process for the preparation of a polymer according to any one of claims 1 to 8, **characterized in that** it is obtained by bringing a molten polyolefin into contact with at least one compound containing a maleimide ring substituted on the nitrogen atom by a reactive group and with at least one polyepoxide containing at least two epoxy groups in its molecule in a mixer or extruder.

10. A process for the preparation of a polymer according to any one of claims 1 to 8, **characterized in that** in a step a), a molten polyolefin is brought into contact with at least one compound containing a maleimide ring substituted on the nitrogen atom by a reactive group in a mixer or in an extruder, then in a step b) at least one compound containing at least two epoxy groups in its molecule is introduced into the mixer or extruder.

11. Use of polymers according to any one of claims 1 to 8 or prepared according to claim 9 or claim 10 for the production of surface coatings.

12. Use of polymers according to any one of claims 1 to 8 or prepared in accordance with claim 9 or claim 10 for the production of polymer alloys.

13. Use of polymers according to any one of claims 1 to 8 or prepared in accordance with claim 9 or claim 10 for the production of co-extruded products.

14. Use of polymers according to any one of claims 1 to 8 or prepared in accordance with claim 9 or claim 10 for the production of multi-layered products.

## Patentansprüche

1. Polymer , das wenigstens einen Succinimidring enthält, der am Stickstoff durch eine reaktive Gruppe substituiert ist, wobei dieser Ring entweder durch die Hauptkette oder durch eine Seitenkette getragen ist, **dadurch gekennzeichnet, dass** es das Produkt ist, welches einer Reaktion wenigstens eines Polyolefins, wenigstens einer Verbindung, die einen Maleimidring umfasst, der am Stickstoff durch eine reaktive Gruppe einer Formel ―R-(X)ₙ substituiert ist, in der X eine reaktive Gruppe, n eine ganze positive Zahl gleich oder größer als 1 und R ein Rest ist, der wenigstens ein Kohlenstoffatom umfasst, und wenigstens einem Polyepoxid, das in seinem Molekül wenigstens zwei Epoxidgruppen enthält resultiert.

2. Polymer nach Anspruch 1, bei dem die reaktive Gruppe X unter einer Hydroxylgruppe, einer Carboxylgruppe, einer Carboxamidgruppe, einer Carboxysäurehalogenidgruppe, einer Thiolgruppe, einer Thiocarboxygruppe, einer Aminogruppe, einer Halogengruppe, einer Epoxygruppe, esterifizierten Carboxygruppe, deren Esterteil eine reaktive Gruppe aufweist, gewählt ist.

3. Polymer nach einem der Ansprüche 1 oder 2, bei dem die Gruppe -R- unter den aliphatischen, gesättigten oder ungesättigten, subsituierten oder nicht subsituierten Kohlenwasserstoffgruppen, den aromatischen, subsituierten oder nicht subsituierten Gruppen gewählt ist.

4. Polymer nach einem der Ansprüche 1 bis 3, bei dem das Polyolefin wenigstens aus der Gruppe gewählt ist, die gebildet wird durch die aus wenigstens einem ungesättigten Monomer erhaltenen Polyolefine, das aus der durch die eine oder mehrere Unsättigungen aufweisenden Verbindungen gebildeten Gruppe gewählt ist und vorzugsweise aus der durch Ethylen, Propen, den Butenen und den Norbornenen gebildeten Gruppe gewählt ist.

5. Polymer nach Anspruch 4, bei dem das Polyolefin ein Polyethylen hoher Dichte ist.

6. Polymer nach einem der Ansprüche 1 bis 5, bei dem die Gruppe -R ein Benzolrest und die Gruppe -X in para-Stellung bezüglich des Stickstoffatoms steht.

7. Polymer nach einem der Ansprüche 1 bis 6, bei dem die Gruppe -X eine Carboxylgruppe ist.

8. Polymer nach einem der Ansprüche 1 bis 6, bei dem das Polyepoxid, welches in seinem Molekül wenigstens zwei Epoxidgruppen enthält aus der durch die aliphatischen Polyepoxide, die cycloaliphatischen Polyepoxide und die aromatischen Polyepoxide gebildeten Gruppe gewählt ist und vorzugsweise unter den Verbindungen der Gruppe gewählt ist, die gebildet wird durch Diglycylether von bis-Phenol-A oder jenem von bis-Phenol-F, Triglycidylehter-Isocyanurat, Triglycidylehter-Cyanurat, Triglycidyl-Cyanurat, TriglycidylIsocyanurat oder den Gemischen von wenigstens zwei dieser Verbindungen.

9. Herstellungsverfahren eines Polymers nach einem der Ansprüche 1 bis 8, **dadurch gekennzeichnet, dass** dieses durch Kontaktieren des Polyolefins in geschmolzenem Zustand mit wenigstens einer Verbindung, die einen Maleimidring umfasst, der am Stickstoff durch eine reaktive Gruppe substituiert ist, und mit wenigstens einem Polyepoxid, das in seinem Molekül wenigstens zwei Epoxidgruppen enthält, in einem Mischer oder einem Extrudierer erhalten wird.

10. Herstellungsverfahren eines Polymers nach einem der Ansprüche 1 bis 8, **dadurch gekennzeichnet, dass** man in einer Stufe a) wenigstens ein Polyolefin in geschmolzenem Zustand mit wenigstens einer Verbindung, die einen Maleimidring umfasst, der am Stickstoff durch eine reaktive Gruppe substituiert ist, in einem Mischer oder einem Extrudierer kontaktiert, und dann in einer Stufe b) in einen Mischer oder in einen Extrudierer wenigstens eine Verbindung einführt, die in ihrem Molekül wenigstens zwei Epoxidgruppen enthält.

11. Verwendung der Polymere nach einem der Ansprüche 1 bis 8 oder hergestellt nach einem der Ansprüche 9 oder 10 für die Herstellung von Oberflächenbelägen.

12. Verwendung der Polymere nach einem der Ansprüche 1 bis 8 oder hergestellt nach einem der Ansprüche 9 oder 10 für die Herstellung von Polymergemengen.

13. Verwendung der Polymere nach einem der Ansprüche 1 bis 8 oder hergestellt nach einem der Ansprüche 9 oder 10 für die Herstellung von Produkten durch Co-Extrusion.

14. Verwendung der Polymere nach einem der Ansprüche 1 bis 8 oder hergestellt nach einem der Ansprüche 9 oder 10 für die Herstellung von mehrlagigen Materialien.
